# EUROPÄISCHE PATENTSCHRIFT

(11) **EP 1 097 677 B1**
(45) Veröffentlichungstag und Bekanntmachung des Hinweises auf die Patenterteilung: **18.01.2006**
(21) Anmeldenummer: 00123875.7
(22) Anmeldetag: 02.11.2000
(51) Int. Cl.: A61C 11/08

(54) **Vorrichtung zum Festlegen eines Dentalmodelles an den Armen eines Artikulators**
Device for fixing a dental model to the arms of an articulator
Dispositif de fixation de modèles dentaires aux bras d'un articulateur

(30) Priorität: 03.11.1999 DE 29919330 U
(43) Veröffentlichungstag der Anmeldung: 09.05.2001
(73) Patentinhaber: AMANN, Dietmar, A-6842 Koblach (AT)
(72) Erfinder: AMANN, Dietmar, A-6842 Koblach (AT)
(74) Vertreter: Menges, Rolf

(56) Entgegenhaltungen:
- DE-U- 9 115 679
- US-A- 2 801 470
- US-A- 4 163 319
- US-A- 4 402 670

## Beschreibung

Die Erfindung betrifft eine Vorrichtung zum Festlegen eines Dentalmodelles an den Armen eines Artikulators oder an einer Bearbeitungsanordnung mit einer Montageplatte, die am Arm des Artikulators oder einer Bearbeitungsanordnung positionsgerecht befestigbar ist und mit einer mit Abstand zur Montageplatte vorgesehenen Auflageplatte für das Dentalmodell und für die Befestigung desselben, wobei die Auflageplatte gegenüber der Montageplatte verstellbar ausgeführt ist.

In der Dentaltechnik werden sogenannte Artikulatoren verwendet. Ein solcher Artikulator ist beispielsweise in der AT-B-393077 gezeigt und beschrieben. An einer Modellplatte wird mit Gips oder einer gipsähnlichen Masse das Dentalmodell (Zahnersatz) festgelegt und die Modellplatte dann an den Armen des Artikulators positionsgerecht befestigt. Dies geschieht beim Zahntechniker. Der vom Zahntechniker gefertigte Zahnersatz wird dem Zahnarzt, der seinerseits den vom Zahntechniker hergestellten Zahnersatz auch mit einem Artikulator prüft, zugestellt. Für diese Prüfung musste der Zahnarzt das Dentalmodell bzw. den Zahnersatz ebenfalls mit Gips oder einer gipsähnlichen Masse auf einer Modellplatte festlegen und diese dann wieder positionsgerecht auf den Armen eines Artikulators befestigen.

Mit der Ausgestaltung nach der AT-B-400098 wurde schon eine wesentliche Verbesserung erreicht, indem für die positionsgerechte Festlegung auf Gips oder gipsähnliche Massen verzichtet werden konnte. Hier wurde parallel zur Montageplatte eine Auflageplatte für das Dentalmodell vorgesehen, wobei das Dentalmodell auf dieser Auflageplatte mittels teils verstellbarer Widerlager festgelegt werden konnte. Die Auflageplatte ist bei dieser bekannten Ausführung gegenüber der Montageplatte sowohl in der Höhe als auch in mindestens zwei in der Ebene der Auflageplatte liegenden Richtung verstellbar. Es ist hier wohl eine bessere Handhabbarkeit geschaffen worden, jedoch sind die Möglichkeiten der Verstellung und die Art der Feststellung der Auflageplatte in der gewünschten Stellung noch nicht optimal.

Die vorliegende Erfindung hat sich daher zur Aufgabe gestellt, bei einer Vorrichtung der eingangs genannten Art die Verstellmöglichkeiten zwischen Montageplatte und Auflageplatte wesentlich zu verbessern und die gegenseitige Fixierung in der gewünschten Lage wirksamer zu gestalten und die Handhabung zu vereinfachen.

Erfindungsgemäß gelingt dies dadurch, dass sowohl an der Montageplatte als auch an der Auflageplatte frei auskragende Arme mit beidseitig ausgebildeten Kupplungselementen angeordnet sind und ein Paar von Stützschienen mit ihren korrespondierend zu den Kupplungselementen ausgeführten Enden die Kupplungselemente an den auskragenden Armen erfassen, und dass die beiden Stützschienen mittels einer Klemmvorrichtung gegeneinander anziehbar und somit an die Kupplungselemente anpressbar sind.

Durch diese erfindungsgemäßen Maßnahmen ist eine Verstellmöglichkeit in allen erforderlichen Richtungen und auch Neigungen für die Auflageplatte gegeben und außerdem kann durch Betätigung einer einzigen Klemmvorrichtung die eingestellte Lage (Richtung, Neigung usw.) fixiert werden. In konstruktiv einfacher Weise ist eine optimale Verbesserung geschaffen worden.

Weiters wird vorgeschlagen, dass die Kupplungselemente als kappenförmige Teile mit im Berührungsbereich mit den Stützschienen kugelabschnittförmiger Oberfläche ausgeführt sind, wobei beidseitig der jeweiligen Arme an der Montageplatte und an der Auflageplatte angeordnete Kupplungselemente achsgleich zueinander ausgerichtet an den Armen gehalten sind. Es wird dadurch eine Art Drehachse zwischen den Kupplungselementen und den Stützschienen geschaffen, wobei durch die Ausgestaltung in einer Kugelabschnittform neben dem Verdrehen auch eine Verschwenkung im Sinne eines Kugelgelenkes möglich geworden ist. Neben einer einfachen Verstellung des Abstandes zwischen der Montageplatte und der Auflageplatte ist daher auch eine Verstellung des Neigungswinkels der Auflageplatte in beliebiger Richtung möglich.

Wenn außerdem vorgesehen wird, dass die Kupplungselemente der kugelabschnittförmigen Oberfläche abgewandt vorstehende Zapfen aufweisen, welche in einen an den Armen ausgebildeten Führungsschlitz eingreifen und dass die beidseitig eines jeden Armes angeordneten Kupplungselemente über einen in im Zentrum der vorstehenden Zapfen ausgebildete Bohrungen eingreifenden Bolzen gleichlaufend miteinander im Führungsschlitz verschiebbar sind, dann ist die Verstellmöglichkeit noch wesentlich erhöht worden. Es sind keine fixierten Drehachsen zwischen den Armen an der Montageplatte und der Auflageplatte einerseits und den Stützschienen andererseits vorhanden. Diese Drehachsen können also beliebig in der Länge der Führungsschlitze in den Armen verstellt werden.

Ferner wird vorgeschlagen, dass die Kupplungselemente axial verschiebbar an den Bolzen geführt gehalten sind. Es ist dadurch beim Verstellvorgang ein loses Verschieben der Kupplungselemente gegenüber der Oberfläche der Arme möglich. Trotzdem ist der Verklemmvorgang nicht behindert, da die eingesetzten Bolzen auch im Zustand der Verklemmung der Vorrichtung nicht beidseitig mit ihren Enden am Grund der Bohrungen in den Kupplungselementen zur Anlage kommen.

Ein besseres Verschieben der Kupplungselemente und eine sichere Auflage beim Verklemmen ist dann möglich, wenn die den frei auskragenden Armen zugewandten Auflageflächen der Kupplungselemente eine umlaufende Ringnut aufweisen, so dass nur der dem Aussenumfang nahe ringförmige Bereich an der Oberfläche der Arme abgestützt ist.

Eine einfache konstruktive Ausgestaltung ist dann gegeben, wenn die Klemmvorrichtung als Klemmschraube ausgebildet ist, welche in einer Durchgangsbohrung der einen Stützschiene hindurchgeführt ist und mit einem Gewindeabschnitt in eine Gewindebohrung der anderen Stützschiene eingreift. Es kann somit durch Anziehen oder Lösen einer einzigen Klemmschraube eine Einstellung der Auflageplatte gegenüber der Montageplatte vorgenommen werden und eine eingestellte Lage sicher fixiert werden.

Damit eine ordnungsgemäße Kraftübertragung von der Klemmschraube auf die Kupplungsbereiche zwischen den Stützschienen und den Kupplungselementen möglich ist, wird vorgesehen, dass die Klemmschraube im Mittelbereich zwischen den beiden Kupplungselementen, also im Mittelbereich bezogen auf die Länge der Stützschienen, angeordnet ist.

Um die Klemmwirkung im Bereich der Kupplungselemente trotz Anordnung nur einer einzigen Klemmschraube noch zusätzlich zu verbessern, wird vorgeschlagen, dass die Klemmvorrichtung aus einer Klemmschraube und einem zwischen den Kopf der Klemmschraube und eine Stützschiene eingesetzten Klemmhebel gebildet ist, wobei sich der Klemmhebel einerseits nahe dem Durchgangsloch für die Klemmschraube und andererseits an einem Endbereich der Stützschiene, und zwar im Bereich der dort zugeordneten Kupplungselemente, an der Oberfläche der Stützschiene abgestützt ist. Dadurch wird in einer Art Hebelwirkung auf den weiter auskragenden Arm des Klemmhebels eine wohl kleinere Kraft als unmittelbar im Bereich der Klemmschraube übertragen, welche jedoch unmittelbar im Bereich der hier vorgesehenen Kupplungselemente ausgeübt wird. Auch bei nur geringem Kraftaufwand beim Festziehen der Klemmschraube ist auf diese Weise eine besondere, unmittelbar im Bereich der Kupplungselemente wirksame Anpresskraft erzielbar. Beim Anziehen der Klemmschraube wird auf diese Weise die gewählte Einstellung der Auflageplatte nicht beeinflusst. Es wird kein Drehmoment auf die Enden der Stützschienen ausgeübt, so dass die Einstellung der Auflageplatte ruhig verbleibt und auch zur Seite hin gesichert ist.

Damit die Kraft unmittelbar im Kupplungsbereich zwischen Kupplungselementen und Stützschienen angreifen kann und außerdem die Lage des Klemmhebels einstellbar ist, ist es vorteilhaft, wenn zumindest einer der Abstützbereiche des Klemmhebels vom freien Ende einer im Klemmhebel verdrehbaren Stellschraube gebildet ist.

Eine volle Wirkung des Klemmhebels wird dann erzielt, wenn der Klemmhebel sich vom Mittelbereich einer Stützschiene in Richtung zu einem Endbereich derselben erstreckt. Nur dadurch wird eine entsprechend große Hebelwirkung ermöglicht. Es ist in diesem Zusammenhang auch denkbar, dass den einander gegenüberliegenden Stützschienen jeweils ein Klemmhebel zugeordnet ist, welche sich jedoch auf den beiden Seiten sich jeweils vom Mittelbereich ausgehend nach entgegengesetzten Richtungen erstrecken und somit mit ihren Enden zwei verschiedenen Enden der Stützschienen und somit der Kupplungselemente erfassen.

Damit die Stützschienen einerseits in gelöstem Zustand der Klemmvorrichtung leicht auf der Oberfläche der Kupplungselemente bewegbar sind und andererseits optimal eine Abstützung auf der kugelabschnittförmigen Oberfläche der Kupplungselemente finden, ist vorgesehen, dass die Stützschienen im Anlagebereich zu den Kupplungselementen eine ringförmige, der Kugeloberfläche derselben angepasste Abstützfläche aufweisen.

Weitere erfindungsgemäße Merkmale und besondere Vorteile werden in der nachstehenden Beschreibung anhand der Zeichnungen noch näher erläutert. Es zeigen:

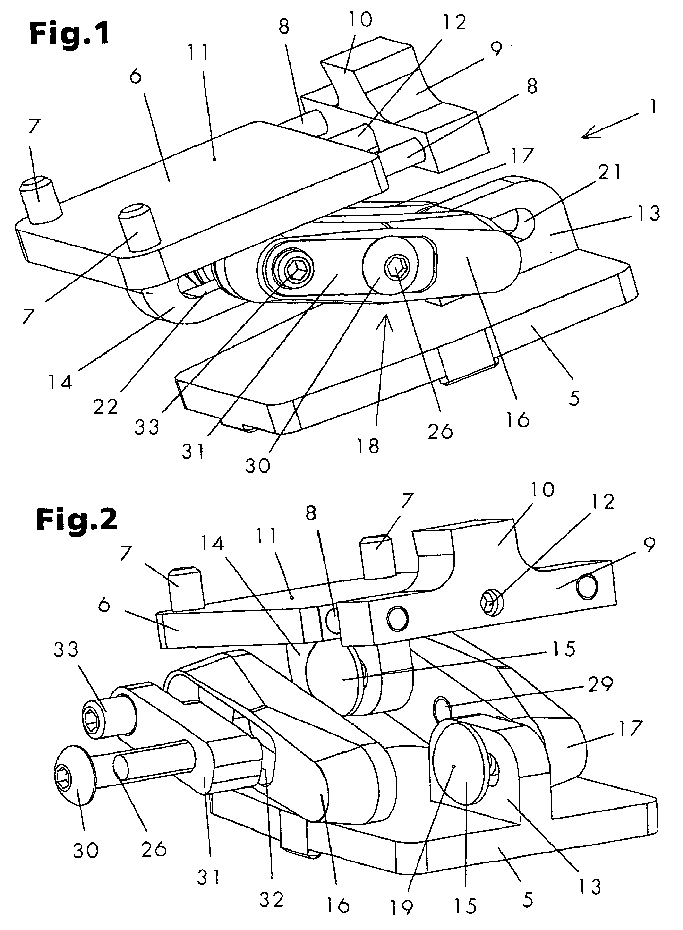

Fig.1 eine Schrägsicht der erfindungsgemäßen Vorrichtung;
Fig.2 ebenso eine Schrägsicht aus einer um etwa 90° verdrehten Richtung, wobei Teile der Vorrichtung auseinandergezogen dargestellt sind;
Fig.3 eine Seitenansicht der Vorrichtung;
Fig.4 eine Vorderansicht der Vorrichtung;
Fig.5 einen Schnitt durch die Vorrichtung nach der Linie V-V in Fig. 3;
Fig.6 den Einsatz von zwei Vorrichtungen in einem Artikulator.

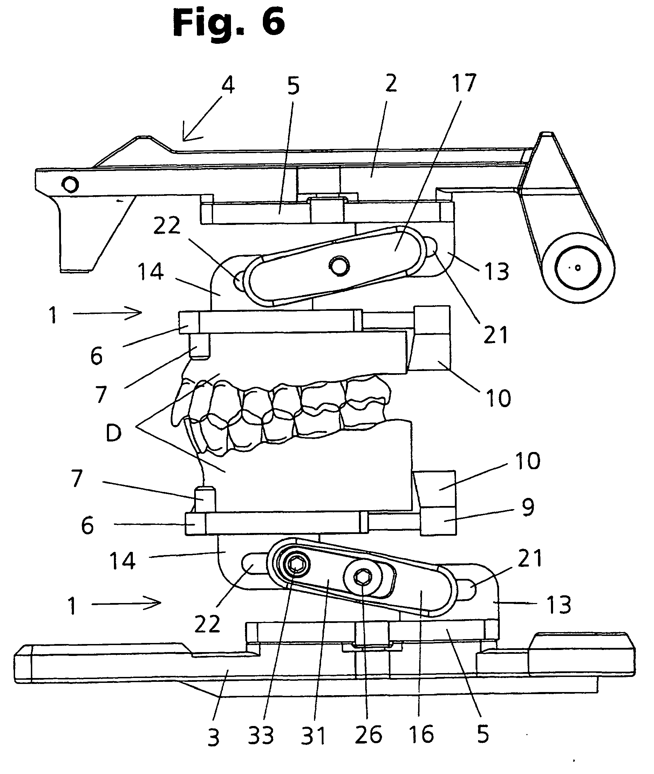

Eine Vorrichtung 1 zum Festlegen eines Dentalmodelles 2 (siehe Fig.6) an den Armen 2 und 3 eines Artikulators 4 oder an einer Bearbeitungsanordnung besteht aus einer Montageplatte 5, welche an jeweils einem Arm 2 oder 3 des Artikulators 4 oder einer entsprechenden Bearbeitungsanordnung positionsgerecht befestigbar ist und einer mit Abstand zur Montageplatte 5 vorgesehenen Auflageplatte 6 für das Dentalmodell 2. Zwischen der Montageplatte 5 und der Auflageplatte 6 sind Verstell- und Klemmvorrichtungen angeordnet, welche nachstehend noch näher erläutert werden. In üblicher Weise sind die Auflageplatte 6 und die Montageplatte 5 annähernd parallel zueinander ausgerichtet, können aber auch einen von der Parallelität abweichenden Winkel miteinander einschließen. Zur optimalen Einstellung der Auflageplatte soll hier gerade auch die Möglichkeit geschaffen werden, die Auflageplatte nach allen Richtungen hin kippbar bzw. schwenkbar auszubilden, um diese dann in der jeweils gewünschten Neigungsstellung, Vertikal- oder Horizontalstellung fixieren zu können.

An der Oberseite der Auflageplatte 6 sind randnah und voneinander distanziert feststehende Widerlager beispielsweise in Form von zwei frei auskragenden Stiften 7 vorgesehen. Parallel zu den Längsseiten der Auflageplatte 6 und in ihrer Ebene befinden sich Führungsbohrungen, in welche Führungsholme 8 ragen, welche an ihrem äußersten Ende mit einem Balken 9 verbunden sind. Dieser Balken 9 bildet ein gegenüber den Stiften 7 bewegliches und verstellbares, die Auflageebene 11 nach überragendes Widerlager 10. Zwischen den beiden Führungholmen 8 ist ein Gewindebolzen 12 vorgesehen, der drehbar, aber axial nicht verschieblich im Balken 9 gelagert ist. Der Gewindebolzen 12 greift in eine Gewindebohrung in der Auflageplatte 6 ein, wobei durch Verdrehen des Gewindebolzens 12 der Balken 9 und somit das Widerlager 10 relativ zu den Stiften 7 verstellbar ist, um das Dentalmodell 2 einzuspannen oder zu lösen.

Die Auflageplatte 6 ist gegenüber der Montageplatte 5 verstellbar ausgeführt. Dabei sind sowohl an der Montageplatte 5 als auch an der Auflageplatte 6 frei auskragende Arme 13 bzw. 14 angeordnet, welchen beidseitig Kupplungselementen 15 zugeordnet sind. Weiters ist ein Paar von Stützschienen 16 und 17 vorgesehen, deren Endbereiche korrespondierend zu den Kupplungselementen 15 ausgeführt sind. Die Stützschienen 16 und 17 erfassen somit mit ihren Enden die Kupplungselemente 15, welche an den auskragenden Armen 13 bzw. 14 montiert sind. Die beiden Stützschienen 16 und 17 sind mittels einer Klemmvorrichtung 18 gegeneinander anziehbar und somit an die Kupplungselemente 15 anpressbar.

Die Kupplungselemente 15 sind als kappenförmige Teile mit im Berührungsbereich mit den Stützschienen kugelabschnittförmiger Oberfläche 19 ausgeführt. Die beidseitig der jeweiligen Arme 13 und 14 an der Montageplatte 5 und an der Auflageplatte 6 angeordneten Kupplungselemente 15 achsgleich zueinander ausgerichtet an den Armen 13 und 14 gehalten sind.

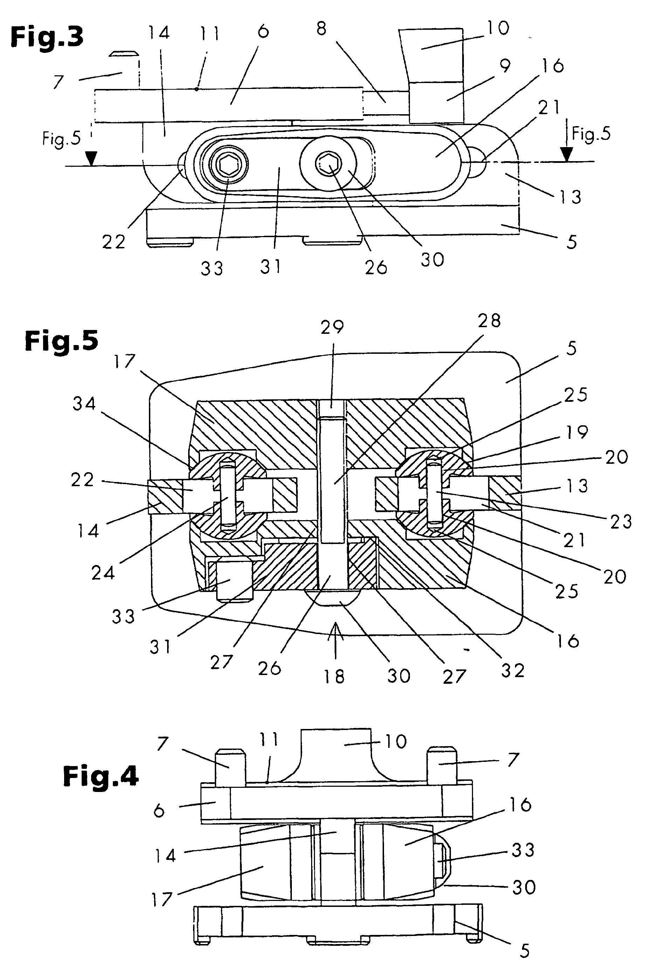

Der kugelabschnittförmigen Oberfläche 19 abgewandt weisen die Kupplungselemente 15 vorstehende Zapfen 20 auf, welche in an den Armen 13 und 14 ausgebildete Führungsschlitze 21 und 22 eingreifen. Über einen Bolzen 23, 24, welche in Bohrungen 25 der Kupplungselemente 15 eingreifen, sind die Kupplungselemente 15 eines jeden Armes 13 bzw. 14 gleichlaufend miteinander im jeweiligen Führungsschlitz 21 bzw. 22 verschiebbar. Da die Enden der Bolzen 23, 24 nicht am Grund der Bohrungen 25 anstehen, sind die Kupplungselemente praktisch axial verschiebbar an den Bolzen 23, 24 geführt gehalten. Beim Lösen der Klemmvorrichtung 18 ist somit ein einfaches Verschieben der Kupplungselemente an der Oberfläche der Arme 13 bzw. 14 möglich. Es können sich aber auch beide einander zugeordneten Kupplungselemente fest an die Oberfläche der Arme 13 bzw. 14 anpressen. Zur Verbesserung kann hier noch beitragen, wenn die den frei auskragenden Armen 13 bzw. 14 zugewandten Auflageflächen der Kupplungselemente 15 eine umlaufende Ringnut (Im Schnitt der Fig.5 ersichtlich) aufweisen, so dass nur der dem Aussenumfang nahe ringförmige Bereich an der Oberfläche der Arme 13 bzw. 14 abgestützt ist.

Die Klemmvorrichtung 18 ist beim gezeigten Beispiel als Klemmschraube 26 ausgebildet. Diese Klemmschraube 26 ist durch eine Durchgangsbohrung 27 an der einen Stützschiene 16 hindurchgeführt und greift mit einem Gewindeabschnitt 28 in eine Gewindebohrung 29 der anderen Stützschiene ein. Durch Festziehen der Klemmschraube 26 können somit die beiden Stützschienen 16 und 17 gegeneinander gezogen und somit mit ihren Endbereichen gegen die Kupplungselemente gepresst werden. Vorteilhaft ist dabei die Klemmschraube 26 im Mittelbereich zwischen den beiden Kupplungselementen 15, also im Mittelbereich bezogen auf die Länge der Stützschienen 16 und 17, angeordnet. Sicher wäre auch die Anordnung von mehr als einer Klemmschraube 26 denkbar, doch wird die Konstruktion dann unnötig komplizierter, da eben mit einer einzigen Klemmschraube auch auszukommen ist.

Eine andere Ausbildung der Klemmvorrichtung wäre durch verschiedene konstruktive Maßnahmen denkbar. So wäre es möglich, eine Klemmvorrichtung nach Art einer Exzenterverspannung vorzusehen, also z.B. mit einem umlegbaren Hebel, welcher an einem Exzenterspannelement angreift.

Eine ganz spezielle Konstruktion der Klemmvorrichtung ist aus den Zeichnungen ersichtlich. Hier wird die Klemmvorrichtung 18 aus einer Klemmschraube 26 und einem zwischen den Kopf 30 der Klemmschraube 26 und einer Stützschiene 16 eingesetzten Klemmhebel 31 gebildet. Der Klemmhebel 31 ist einerseits nahe dem Durchgangsloch 27 für die Klemmschraube 26, und zwar über einen Stützfuß 32, und andererseits an einem Endbereich der Stützschiene 16, und zwar im Bereich der dort zugeordneten Kupplungselemente 15, an der Oberfläche der Stützschiene 16 abgestützt. Der Abstützbereich des an dem freien Endbereich des Klemmhebels 31 ist von einer im Klemmhebel 31 verdrehbaren Stellschraube 33 gebildet.

In vorteilhafter Weise erstreckt sich der Klemmhebel 31 vom Mittelbereich einer Stützschiene 16 oder 17 in Richtung zu einem Endbereich derselben. Im Rahmen der Erfindung wäre es auch denkbar, dass beiden Stützschienen 16 und 17 solche Klemmhebel 31 zugeordnet wären, wobei denn dies vom Mittelbereich derselben ausgehend zu den zwei entgegengesetzt liegenden Endbereichen überbrücken würden. Trotzdem wäre auch dies mit einer einzigen Klemmschraube 26 oder einer anderen Klemmvorrichtung zu schaffen. Bei Anordnung einer Klemmschraube 26 wäre dann in dem einen Klemmhebel und in den beiden Stützschienen ein Durchgangsloch 27 und in dem anderen Klemmhebel wäre dann die Gewindebohrung zum Eingreifen des Gewindebereiches der Klemmschraube ausgebildet.

In konstruktiver Hinsicht ist noch zu vermerken, dass für eine Leichtgängigkeit beim Verstellen und für eine feste Verklemmung die Stützschienen 16 und 17 im Anlagebereich zu den Kupplungselementen 15 eine ringförmige, der Kugeloberfläche der Kupplungselemente 15 angepasste Abstützfläche 34 aufweisen.

Aus dem Vorstehenden ist ersichtlich, dass die Auflageplatte 6, auf der das Dentalmodell 2 wie mit einem Schraubstock bzw. einer Schraubzwinge aufspannbar ist, nach Lösen der Klemmvorrichtung 18 gegenüber der Montageplatte 5 sowohl in der Höhe als auch seitlich und aber auch in der Winkellage, also in verschiedenste Neigungen, verstellbar ist. Bei Artikulatoren wird die erfindungsgemäße Vorrichtung 1 in der Regel paarweise eingesetzt, wie dies auch der Fig.6 entnommen werden kann. Die Vorrichtung kann auch aber auch in anderen dentaltechnischen Bearbeitungsanordnungen vorteilhaft eingesetzt werden, z.B. im Zusammenhang mit Splitplatten. Es ist auch denkbar, daß ein Dentalmodell 2 auf einer Auflageplatte 6 eingespannt auf diese Weise von einer Bearbeitungsanordnung zur anderen transportiert wird, so dass immer die gleiche Einstellung der Auflageplatte 6 in bezug auf die Montageplatte gegeben ist.

## Patentansprüche

1. Vorrichtung zum Festlegen eines Dentalmodelles (D) an den Armen (2, 3) eines Artikulators (4) oder an einer Bearbeitungsanordnung mit einer Montageplatte (5), die am Arm (2, 3) des Artikulators (4) oder einer Bearbeitungsanordnung positionsgerecht befestigbar ist und mit einer mit Abstand zur Montageplatte (5) vorgesehenen Auflageplatte (6) für das Dentalmodell (D) und für die Befestigung desselben, wobei die Auflageplatte (6) gegenüber der Montageplatte (5) verstellbar ausgeführt ist und wobei sowohl an der Montageplatte (5) als auch an der Auflageplatte (6) frei auskragende Arme (13,14) ausgebildet sind, welche mittels eines Paares von Stützschienen (16,17) verbunden sind, **dadurch gekennzeichnet, daß** die frei auskragenden Arme (13, 14) mit beidseitig ausgebildeten Kupplungselementen (15) versehen sind, welche als kappenförmige Teile mit im Berührungsbereich mit den Stützschienen (16,17) kugelabschnittförmiger Oberfläche (19) ausgeführt sind, wobei die Stützschienen (16, 17) mit ihren korrespondierend zu den Kupplungselementen (15) ausgeführten Enden die Kupplungselemente (15) an den auskragenden Armen (13,14) erfassen, und daß die beiden Stützschienen (16,17) mittels einer Klemmvorrichtung (18) gegeneinander anziehbar und somit an die Kupplungselemente (15) anpressbar sind.

2. Vorrichtung nach Anspruch 1, **dadurch gekennzeichnet, daß** die beidseitig der jeweiligen Arme (13,14) an der Montageplatte (5) und an der Auflageplatte (6) angeordneten Kupplungselemente (15) achsgleich zueinander ausgerichtet an den Armen (13,14) gehalten sind.

3. Vorrichtung nach den Ansprüchen 1 und 2, **dadurch gekennzeichnet, dass** die Kupplungselemente (15) der kugelabschnittförmigen Oberfläche (19) abgewandt vorstehende Zapfen (20) aufweisen, welche in einen an den Armen (13,14) ausgebildeten Führungsschlitz (21,22) eingreifen und dass die beidseitig eines jeden Armes (13,14) angeordneten Kupplungselemente (15) über einen in im Zentrum der vorstehenden Zapfen (20) ausgebildete Bohrungen (25) eingreifenden Bolzen (23) gleichlaufend miteinander im Führungsschlitz (21,22) verschiebbar sind.

4. Vorrichtung nach Anspruch 3, **dadurch gekennzeichnet, dass** die Kupplungselemente (15) axial verschiebbar an den Bolzen (23) geführt gehalten sind.

5. Vorrichtung nach einem der vorstehenden Ansprüche, **dadurch gekennzeichnet, dass** die den frei auskragenden Armen (13,14) zugewandten Auflageflächen der Kupplungselemente (15) eine umlaufende Ringnut aufweisen, so dass nur der dem Aussenumfang nahe ringförmige Bereich an der Oberfläche der Arme (13,14) abgestützt ist.

6. Vorrichtung nach Anspruch 1, **dadurch gekennzeichnet, dass** die Klemmvorrichtung (18) als Klemmschraube (26) ausgebildet ist, welche in einer Durchgangsbohrung (27) der einen Stützschiene (16) hindurchgeführt ist und mit einem Gewindeabschnitt (28) in eine Gewindebohrung (29) der anderen Stützschiene (17) eingreift.

7. Vorrichtung nach Anspruch 6, **dadurch gekennzeichnet, dass** die Klemmschraube (26) im Mittelbereich zwischen den beiden Kupplungselementen (15), also im Mittelbereich bezogen auf die Länge der Stützschienen (16,17), angeordnet ist.

8. Vorrichtung nach den Ansprüchen 1 oder 2 und 3, **dadurch gekennzeichnet, dass** die Klemmvorrichtung (18) aus einer Klemmschraube (26) und einem zwischen den Kopf (30) der Klemmschraube (26) und eine Stützschiene (16) eingesetzten Klemmhebel (31) gebildet ist, wobei der Klemmhebel (31) einerseits nahe dem Durchgangsloch (27) für die Klemmschraube (26) und andererseits an einem Endbereich der Stützschiene (16), und zwar im Bereich der dort-zugeordneten Kupplungselemente (15), an der Oberfläche der Stützschiene (16) abgestützt ist.

9. Vorrichtung nach Anspruch 9, **dadurch gekennzeichnet, dass** zumindest einer der Abstützbereiche des Klemmhebels (31) vom freien Ende einer im Klemmhebel (31) verdrehbaren Stellschraube (33) gebildet ist.

10. Vorrichtung nach den Ansprüchen 8 und 9, **dadurch gekennzeichnet, dass** der Klemmhebel (31) sich vom Mittelbereich einer Stützschiene (16,17) in Richtung zu einem Endbereich derselben erstreckt.

11. Vorrichtung nach Anspruch 1, **dadurch gekennzeichnet, dass** die Stützschienen (16,17) im Anlagebereich zu den Kupplungselementen (15) eine ringförmige, der Kugeloberfläche derselben angepasste Abstützfläche (34) aufweisen.

## Claims

1. A device for fixing a dental model (D) to the arms (2,3) of an articulator (4) or to a handling assembly, with a mounting plate (5) which can be fastened in the correct position to the arms (2,3) of the articulator (4) or a handling assembly, and with a support plate (6) for the dental model (D) provided at a distance from the mounting plate (5) and for securing the latter, wherein the support plate. (6) is designed to be adjustable relative to the mounting plate (5) and wherein freely projecting arms (13,14) are formed both on the mounting plate (5) and on the support plate (6), which arms are connected by means of a pair of support rails (16,17), **characterised in that** the freely projecting arms (13,14) are provided with coupling elements (15) which are formed on both sides and which are in the form of cap-like parts of spherical-section surface (19) in the zone of contact with the support rails (16,17), wherein at the ends formed corresponding to the coupling elements (15) the support rails (16,17) engage the coupling elements (15) at the projecting arms (13,14), and **in that** the two support rails (16,17) can be tightened against one another by means of a clamping device (18) and can thus be pressed against the coupling elements (15).

2. A device according to Claim 1, **characterised in that** the coupling elements (15) disposed on either side of the respective arms (13,14) on the mounting plate (5) and on the support plate (6) are aligned coaxially to one another on the arms (13,14).

3. A device according to Claims 1 and 2, **characterised in that** the coupling elements (15) of the spherical-section surface (19) have remotely projecting studs (20) which engage into guide slots (21,22) formed in the arms (13,14), and **in that** the coupling elements (15) disposed on either side of each arm (13,14) can be displaced synchronously with one another in the guide slots (21,22) via a pin (23) engaging in bores (25) formed in the centre of the projecting studs (20).

4. A device according to Claim 3, **characterised in that** the coupling elements (15) are guided axially displaceably on the pin (23).

5. A device according to any one of the preceding Claims, **characterised in that** the support surfaces of the coupling elements (15) nearest the freely projecting arms (13, 14) have a continuous annular groove so that only the annular zone near the outer circumference is supported on the surface of the arms (13,14).

6. A device according to Claim 1, **characterised in that** the clamping device (18) is in the form of clamping screw (26) which passes through a through-bore (27) in one support rail (16) and with a threaded portion (28) engages in a threaded bore (29) in the other support rail (17).

7. A device according to Claim 6, **characterised in that** the clamping screw (26) is disposed in the central region between the two coupling elements (15), i.e. in the central region in relation to the length of the support rails (16,17).

8. A device according to Claims 1 or 2 and 3, **characterised in that** the clamping device (18) comprises a clamping screw (26) and a clamping lever (31) inserted between the head (30) of the clamping screw (26) and a support rail (16), wherein the clamping lever (31) is supported, on the one hand, near the through-hole (27) for the clamping screw (26) and, on the other hand, at an end zone of the support rail (16), that is in the vicinity of the coupling elements (15) associated with this location, on the surface of the support rail (16).

9. A device according to Claim 9, **characterised in that** at least one of the supporting zones of the clamping lever (31) is formed by the free end of a setscrew (33) which can be turned in the clamping lever (31).

10. A device according to Claims 8 and 9, **characterised in that** the clamping lever (31) extends from the central zone of one support rail (16,17) towards an end zone thereof.

11. A device according to Claim 1, **characterised in that** in the contact zone with the coupling elements (15) the support rails (16,17) have an annular support surface (34) adapted to the spherical surface thereof.

## Revendications

1. Dispositif de fixation d'un modèle dentaire (D) aux bras (2, 3) d'un articulateur (4) ou à un dispositif d'usinage comprenant une plaque de montage (5), qui peut être fixée en position au bras (2, 3) de l'articulateur (4) ou d'un dispositif d'usinage et une plaque de pose (6) écartée de la plaque de montage (5) pour le modèle dentaire (D) et pour la fixation de celui-ci, la plaque de pose (6) étant mobile par rapport à la plaque de montage (5) et avec des bras saillant librement (13, 14) formés aussi bien sur la plaque de montage (5) que sur la plaque de pose (6), et reliés au moyen d'une paire de rails de support (16, 17),
**caractérisé en ce que**
les bras saillant librement (13, 14) sont pourvus d'éléments de couplage (15) formés de part et d'autre, qui se présentent sous la forme de pièces en forme de capuchons avec une surface (19) en forme de segment de sphère dans la région de contact avec les rails de support (16, 17), les rails de support (16, 17) attachent les éléments de couplage (15) aux bras saillants (13, 14) avec leurs extrémités réalisées en correspondance avec les éléments de couplage (15), et les deux rails de support (16, 17) peuvent être serrés l'un contre l'autre au moyen d'un dispositif de serrage (18) pour être pressés sur les éléments de couplage (15).

2. Dispositif selon la revendication 1,
**caractérisé en ce que**
les éléments de couplage (15) disposés de part et d'autre des bras respectifs (13, 14) sur la plaque de montage (5) et sur la plaque de pose (6) sont maintenus sur les bras (13, 14) avec la même orientation axiale l'un par rapport à l'autre.

3. Dispositif selon les revendications 1 et 2,
**caractérisé en ce que**
les éléments de couplage (15) présentent des tourillons (20) saillants en direction opposée à la surface en forme de segment de sphère (19), et qui s'engagent dans une fente de guidage (21, 22) formée sur les bras (13, 14), et les éléments de couplage (15) disposés de part et d'autre de chaque bras (13, 14) sont déplaçables ensemble l'un avec l'autre dans la fente de guidage (21, 22) par un boulon (23) s'engageant dans des alésages formés au centre des tourillons saillants (20).

4. Dispositif selon la revendication 3,
**caractérisé en ce que**
les éléments de couplage (15) sont maintenus et guidés de façon déplaçable axialement sur le boulon (23).

5. Dispositif selon l'une quelconque des revendications précédentes,
**caractérisé en ce que**
les faces d'application des éléments de couplage (15) orientées vers les bras saillant librement (13, 14) présentent une rainure annulaire périphérique, de sorte que seule la région annulaire proche du périmètre extérieur soit supportée sur la surface des bras (13, 14).

6. Dispositif selon la revendication 1,
**caractérisé en ce que**
le dispositif de serrage (18) est constitué par une vis de serrage (26) introduite à travers un alésage traversant (27) d'un rail de support (16) et qui est en prise par une partie filetée (28) dans un alésage fileté (29) de l'autre rail de support (17).

7. Dispositif selon la revendication 6,
**caractérisé en ce que**
la vis de serrage (26) est disposée dans la région centrale entre les deux éléments de couplage (15), donc dans la région centrale par rapport à la longueur des rails de support (16, 17).

8. Dispositif selon les revendications 1 ou 2 et 3,
**caractérisé en ce que**
le dispositif de serrage (18) est formé par une vis de serrage (26) et par un levier de serrage (31) inséré entre la tête (30) de la vis de serrage (26) et un rail de support (16), le levier de serrage (31) étant supporté d'une part à proximité du trou traversant (27) pour la vis de serrage (26) et d'autre part sur la surface de ce rail (16) dans une région d'extrémité de la barre de support (16), notamment dans la région des éléments de couplage (15) associés à cet endroit.

9. Dispositif selon la revendication 8,
**caractérisé en ce qu'**
au moins une des régions de support du levier de serrage (31) est formée par l'extrémité libre d'une vis de réglage (33) se vissant dans le levier de serrage (31).

10. Dispositif selon les revendications 8 et 9,
**caractérisé en ce que**
le levier de serrage (31) s'étend depuis la région centrale d'un rail de support (16, 17) en direction d'une région d'extrémité de celle-ci.

11. Dispositif selon la revendication 1,
**caractérisé en ce que**
les rails de support (16, 17) présentent dans la région d'appui des éléments de couplage (15) une face d'appui annulaire (34), adaptée à la surface sphérique de celle-ci.
